(19) Europäisches Patentamt
European Patent Office
Office européen des brevets

(11) **EP 2 324 543 B1**

(12) **EUROPÄISCHE PATENTSCHRIFT**

(45) Veröffentlichungstag und Bekanntmachung des Hinweises auf die Patenterteilung:
**22.01.2014  Patentblatt 2014/04**

(21) Anmeldenummer: **09778474.8**

(22) Anmeldetag: **11.09.2009**

(51) Int Cl.:
*H01S 3/23* (2006.01)　　　*H01S 3/00* (2006.01)
*H01S 3/067* (2006.01)　　　*H01S 3/106* (2006.01)

(86) Internationale Anmeldenummer:
**PCT/EP2009/006595**

(87) Internationale Veröffentlichungsnummer:
**WO 2010/028837 (18.03.2010 Gazette 2010/11)**

(54) **VORRICHTUNG ZUM VERSTÄRKEN VON LICHTIMPULSEN**

LIGHT PULSE AMPLIFICATION DEVICE

DISPOSITIF D'AMPLIFICATION D'IMPULSIONS LUMINEUSES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.09.2008  DE 102008047226**

(43) Veröffentlichungstag der Anmeldung:
**25.05.2011  Patentblatt 2011/21**

(73) Patentinhaber:
• **Fraunhofer-Gesellschaft zur Förderung der angewandten Forschung e.V.
80686 München (DE)**
• **Friedrich-Schiller-Universität Jena
07743 Jena (DE)**

(72) Erfinder:
• **SCHIMPF, Damian
Cambridge, MA 02139 (US)**
• **LIMPERT, Jens, Prof., Dr.
07751 Jena (DE)**
• **TÜNNERMANN, Andreas
99425 Weimar (DE)**

(74) Vertreter: **Behrendt, Arne
Schneiders & Behrendt,
Rechts- und Patentanwälte
Huestrasse 23
44787 Bochum (DE)**

(56) Entgegenhaltungen:
**WO-A1-03/055015　　WO-A2-2007/008615
DE-A1- 19 531 059　　US-A1- 2004 000 942**

• **TOURNOIS P: "Acousto-optic programmable dispersive filter for adaptive compensation of group delay time dispersion in laser systems" OPTICS COMMUNICATIONS, NORTH-HOLLAND PUBLISHING CO. AMSTERDAM, NL, Bd. 140, Nr. 4-6, 1. August 1997 (1997-08-01), Seiten 245-249, XP004082630 ISSN: 0030-4018**

EP 2 324 543 B1

**Beschreibung**

Die Erfindung betrifft eine Vorrichtung zum Verstärken von Lichtimpulsen, mit einem Strecker, der die Lichtimpulse zeitlich streckt, wenigstens einem Verstärker, der die gestreckten Lichtimpulse verstärkt, und einem Kompressor, der die gestreckten und verstärkten Lichtimpulse rekomprimiert, wobei der Strecker und der Kompressor dispersive Elemente mit im Wesentlichen entgegensetzt gleicher Dispersion sind. Des Weiteren betrifft die Erfindung ein Verfahren zum Verstärken von Lichtimpulsen.

Derartige Vorrichtungen sind bekannt und finden z.B. Einsatz bei der Erzeugung hochenergetischer Laserimpulse. Dabei werden meist ultrakurze Lichtimpulse, die eine Pulsdauer im Bereich von Pikosekunden oder Femtosekunden aufweisen, bis in den Petawatt-Bereich verstärkt. Um Schäden an optischen Elementen sowie Limitierungen durch nichtlineare Effekte zu vermeiden, werden die ultrakurzen Lichtimpulse zunächst durch einen Strecker geführt, der die Lichtimpulse durch Dispersion zeitlich streckt. Dabei erhalten die Lichtimpulse eine längere Pulsdauer und eine geringere Amplitude. Die zeitlich gestreckten Lichtimpulse werden anschließend durch einen Verstärker, beispielsweise eine optisch gepumpte Verstärkerfaser, verstärkt, ohne dass es zu Schäden an den optischen Elementen des Verstärkers oder zu unerwünschten Nichtlinearitäten kommt. Die zeitlich gestreckten und verstärkten Lichtimpulse werden anschließend durch einen Kompressor, wiederum mittels Dispersion, rekomprimiert. Dabei erhalten die Lichtimpulse die gewünschte hohe Intensität und kurze Pulsdauer.

Das vorbeschriebene Verstärkungsprinzip wird auch als chirpmodulierte Pulsverstärkung (CPA - Chirped Pulse Amplification) bezeichnet. Bei CPA-Systemen ist es bekannt, dem anfänglichen ultrakurzen Lichtimpuls mittels eines Streckers, der als Element normaler Dispersion ausgebildet ist, einen positiven Chirp aufzuprägen. Dieser wird nach der Verstärkung durch den Kompressor, der entsprechend als Element anormaler Dispersion ausgebildet ist, kompensiert. Konventionelle Elemente zum Erzeugen des positiven Chirps sind beispielsweise Gitterstrecker (z. B. vom Typ Öffner), wobei der positive Chirp nach dem Verstärken des Lichtimpulses durch einen aus einem geeigneten Gitterpaar bestehenden Gitterkompressor kompensiert wird.

Von Nachteil bei solchen CPA-Systemen sind die Dimensionen und die Justageanfälligkeit der Gitteranordnungen, wobei die Dimensionen des Gitterstreckers meist größer als die des Gitterkompressors sind. Um diese Probleme zu lösen, ist beispielsweise vorgeschlagen worden, Faserstrecker-Gitterkompressor-CPA-Systeme zu verwenden, bei denen jedoch unkompensierte Dispersionsterme höherer Ordnung die Qualität der rekomprimierten Lichtimpulse beeinträchtigen können. Bekannt ist weiterhin, dass eine Verbesserung der Kompaktheit sowie Justageempfindlichkeit eines CPA-Systems durch die Verwendung von gechirpten Volumen-Bragg-Gittern (VBG) zum Strecken und zum Komprimieren der Lichtimpulse erreicht werden kann.

Ein herkömmliches CPA-System ist z.B. aus der Offenlegungsschrift DE 195 31 059 A1 bekannt, bei welchem sowohl der Strecker, als auch der Kompressor als gechirpte Bragg-Gitter ausgebildet sind und im Wesentlichen entgegengesetzt gleiche Dispersion aufweisen. Zwischen dem Strecker und dem Kompressor ist ein Verstärker angeordnet, mit dem die zeitlich gestreckten Lichtimpulse verstärkt werden. Des Weiteren ist eine Dispersions-Kompensationsvorrichtung vorgesehen, die die Dispersion des Verstärkers, beliebiger weiterer optischer Komponenten des Systems sowie eine etwaige Dispersions-Fehlanpassung von Strecker und Kompressor kompensieren kann. Als Dispersions-Kompensationsvorrichtung kann bei dem bekannten System beispielsweise eine Wellenleiter-Struktur oder eine optische Faser mit positiver oder negativer Dispersion dienen.

Nachteilig bei herkömmlichen Vorrichtungen zum Verstärken von Lichtimpulsen ist, dass sie meist einen statischen und wenig kompakten Aufbau aufweisen, so dass solche Vorrichtungen nicht auf einfache Art und Weise an ihren jeweiligen Einsatzzweck anpassbar und daher nicht sehr flexibel einsetzbar sind.

Daher ist es die Aufgabe der vorliegenden Erfindung, eine verbesserte Vorrichtung zum Verstärken von Lichtimpulsen bereitzustellen.

Diese Aufgabe wird erfindungsgemäß durch eine Vorrichtung der eingangs genannten Art gelöst, welche dadurch gekennzeichnet ist, dass die Dispersion des wenigstens einen Verstärkers, die Dispersion weiterer optischer Elemente der Vorrichtung und/oder die Fehlanpassung der Dispersion von Strecker und Kompressor durch wenigstens ein zusätzliches Element variabler Dispersion, welches zwischen Strecker und Verstärker angeordnet ist zumindest teilweise, kompensiert sind, wobei das wenigstens eine zusätzliche Element variabler Dispersion ein verstellbares Prismen- oder Beugungsgitterpaar oder ein Flüssigkristallelement umfasst.

Mit der erfindungsgemäßen Vorrichtung kann somit beispielsweise die in einem CPA-System durch optische Elemente eines Verstärkers, die Dispersion weiterer optischer Elemente des Systems und/oder die Fehlanpassung der Dispersion von Strecker und Kompressor erzeugte Dispersion variabel und exakt kompensiert werden, wozu einerseits gezielt die nichtlineare Selbstphasenmodulation der Lichtimpulse und andererseits wenigstens ein zusätzliches Element variabler Dispersion oder eine Kombination dieser Maßnahmen verwendet werden kann. Als weitere optische Elemente der Vorrichtung bzw. eines CPA-Systems können beispielsweise passive Filter, Isolatoren, Filter, Modulatoren und ähnliches eingesetzt werden.

Die Fehlanpassung der Dispersion von Strecker und Kompressor resultiert aus dem Einfluss der Dispersion der optischen Elemente des Verstärkers und aus der Dispersion weiterer optischer Elemente der Vorrichtung. Zu berücksichtigen ist außerdem eine leistungsabhängige Fehlanpassung, verursacht durch Nichtlinearitäten in Form von Selbstphasenmodulation. Da diese Einflüsse leistungsabhängig und kontinuierlich variierbar sind, muss zur idealen Rekompression der Lichtimpulse eine entsprechende Anpassung der Dispersion des Kompressors nicht nur an die Dispersion des Streckers, sondern auch an diese weiteren Nichtlinearitäten erfolgen. Findet eine solche Anpassung nicht oder nur ungenau statt, wird eine entsprechende Fehlanpassung erzeugt, welche es zu kompensieren gilt, um hinsichtlich Pulsdauer und -amplitude optimale Lichtimpulse zu erzielen. Die Dispersion des Verstärkers und/oder der weiteren optischen Elemente der Vorrichtung bewirkt selbst bei optimal aufeinander abgestimmtem Strecker und Kompressor eine nicht ideale Rekompression der Lichtimpulse. Gemäß der Erfindung wird mittels Selbstphasenmodulation und/oder mittels wenigstens eines zusätzlichen Elementes variabler Dispersion eine möglichst ideale Kompensation der in der Vorrichtung auftretenden störenden Dispersionsterme auf einfache Art und Weise erzielt.

Die durch die optischen Elemente des Verstärkers und/oder die weiteren optischen Elemente der Vorrichtung aufgeprägte Phase sowie die durch Selbstphasenmodulation aufgeprägte leistungsabhängige, nichtlineare Phase ist typischerweise deutlich kleiner als die Phase, welche betragsmäßig durch die Fehlanpassung des Gesamtsystems aufgeprägt wird. Um letztere Phase optimal zu kompensieren, kann gemäß der Erfindung das wenigstens eine zusätzliche Element variabler Dispersion eingesetzt werden. Beispielsweise kann ein sehr kompakter Gitterkompressor, bestehend aus zwei Beugungsgittern mit variablem Abstand zueinander, als zusätzliches Element variabler Dispersion dienen.

Ob lediglich Selbstphasenmodulation oder das wenigstens eine zusätzliche Element variabler Dispersion oder eine Kombination dieser Maßnahmen zur Kompensation unerwünschter Dispersionsterme verwendet wird, hängt von dem jeweiligen Einsatzzweck der Vorrichtung ab.

Insgesamt zeigt sich schon hier, dass die erfindungsgemäße Vorrichtung höchst variabel an verschiedenste Einsatzzwecke anpassbar ist, was auf einfache Art und Weise ohne den Austausch sämtlicher Bauelemente der Vorrichtung erfolgen kann.

Nach einer vorteilhaften Ausgestaltung der Erfindung haben die dispersiven Elemente des Streckers und/oder des Kompressors eine statische oder eine schrittweise variable Dispersion, wobei das wenigstens eine zusätzliche Element variabler Dispersion eine stufenlos variable Dispersion hat. Der Strecker und/oder der Kompressor können bezüglich der Dispersion z.B. stufenweise variiert werden. In den verschiedenen Einstellungsstufen kann die Fehlanpassung von Strecker und Kompressor mit dem wenigstens einen zusätzlichen Element variabler Dispersion kompensiert werden. Dieses kann sehr variabel und genau erfolgen, da das wenigstens eine zusätzliche Element variabler Dispersion eine stufenlos variable Dispersion aufweist.

Eine weitere vorteilhafte Ausgestaltung der Erfindung sieht vor, dass die dispersiven Elemente des Streckers und/oder des Kompressors Beugungsgitter, gechirpte faseroptische oder volumenoptische Bragg-Gitter, Prismen oder Wellenleiterstrukturen wie optische Fasern sind. Insbesondere die Verwendung von gechirpten Volumen-Bragg-Gittern ermöglicht einen sehr kompakten Aufbau der Vorrichtung.

Gemäß einer weiteren vorteilhaften Ausgestaltung der Erfindung umfasst das wenigstens eine zusätzliche Element variabler Dispersion ein verstellbares Prismenpaar oder Beugungsgitterpaar. Auch diese Ausgestaltung des zusätzlichen Elementes variabler Dispersion bewirkt eine sehr kompakte Ausgestaltung der gesamten Vorrichtung. Durch Variation der Abstände der verwendeten Prismen oder der Beugungsgitter zueinander kann die Dispersion des zusätzlichen Elementes variabler Dispersion stufenlos variabel eingestellt werden, um eine durch weitere Komponenten der Vorrichtung erzeugte Dispersion stets möglichst exakt kompensieren zu können. Ferner kann das zusätzliche Element variabler Dispersion je nach Anforderungen an die Vorrichtung ein akusto-optisches, durchstimmbares Filter oder einen Flüssigkristallmodulator aufweisen.

Es wird weiter vorgeschlagen, dass die Dispersion des wenigstens einen zusätzlichen Elementes variabler Dispersion betragsmäßig kleiner ist als die Dispersion des Streckers oder des Kompressors. Da das zusätzliche Element nur zur Kompensation von Fehlanpassungen dient, kann dessen Dispersion betragsmäßig deutlich kleiner sein als diejenige von Strecker bzw. Kompressor. Dies bedeutet, dass das zusätzliche Element variabler Dispersion im Verhältnis zu Strecker und Kompressor sehr viel kompakter ausgebildet sein kann, was sich positiv auf die Kompaktheit der gesamten Vorrichtung auswirkt.

Nach vorteilhafter Ausgestaltung der Erfindung haben die Lichtimpulse eine parabolische Impulsform, eine $sech^2$-Form oder eine Gauss-Form, wobei die Wahl einer parabolischen Impulsform eine exakte Kompensation der Dispersion 2. Ordnung gewährleistet. Die hierzu alternativen Impulsformen führen jedoch ebenso zu einer guten Dispersionskompensation.

Zweckmäßigerweise ist das wenigstens eine zusätzliche Element variabler Dispersion vor der Strecker oder zwischen dem Strecker und dem Verstärker angeordnet. Hierdurch können beispielsweise durch optische Elemente des Verstärkers und/oder der weiteren optischen Elemente der Vorrichtung hervorgerufene Phasenterme schon vorab derartig beeinflusst werden, dass die Dispersion der optischen Elemente der gesamten Vorrichtung insgesamt optimal kompensiert wird. Das zusätzliche Element variabler Dispersion wird somit vor dem Verstärker, d.h. in einem Bereich des Strahlengangs der Lichtimpulse eingesetzt, in dem die Lichtimpulse eine geringe Amplitude haben. Ein großvolumiger Aufbau des zusätzlichen Elementes variabler Dispersion oder gar eine Kühlung sind daher nicht erforderlich. Somit kann das zusätzliche Element vorteilhafterweise sehr klein und kompakt ausgebildet sein.

Ferner wird vorgeschlagen, dass die Energie und die Dauer der Lichtimpulse sowie die Verstärkung der Lichtimpulse in der Weise aufeinander abgestimmt sind, dass die Dispersion des Verstärkers, die Dispersion der weiteren optischen Elemente der Vorrichtung und/oder die Fehlanpassung der Dispersion von Strecker und Kompressor im Wesentlichen vollständig durch Selbstphasenmodulation der Lichtimpulse kompensiert sind. Dies entspricht der oben bereits angesprochenen Einstellung eines Arbeitspunktes der Vorrichtung zur Erzeugung von Lichtimpulsen mit optimalen Eigenschaften hinsichtlich Pulsdauer und Pulsamplitude.

Insgesamt ist festzuhalten, dass mit der vorliegenden Erfindung eine Vorrichtung zum Verstärken von Lichtimpulsen vorgeschlagen wird, die sehr kompakt ausgebildet und gleichzeitig sehr variabel einsetzbar ist. Zu diesem Zweck sind unterschiedlichste Kombinationen der vorgenannten Merkmale möglich.

Mit der Erfindung wird weiter ein Verfahren zum Verstärken von Lichtimpulse unter Verwendung einer geeigneten Vorrichtung vorgeschlagen, wobei mittels eines Streckers die Lichtimpulse einer Lichtquelle zeitlich gestreckt werden, mittels wenigstens eines Verstärkers die gestreckten Lichtimpulse verstärkt werden und mittels eines Kompressors die gestreckten und verstärkten Lichtimpulse rekomprimiert werden, wobei der Strecker und der Kompressor dispersive Elemente mit im Wesentlichen entgegensetzt gleicher Dispersion sind. Das Verfahren ist erfindungsgemäß dadurch gekennzeichnet, dass die Dispersion des Verstärkers, die Dispersion von weiteren optischen Elementen der Vorrichtung und/oder die Fehlanpassung der Dispersion von Strecker und Kompressor durch Selbstphasenmodulation der Lichtimpulse unter Einstellung eines geeigneten Arbeitspunktes hinsichtlich Pulsamplitude und Pulsdauer und/oder durch wenigstens ein verstellbares Prismen- oder Beugungsgitterpaar oder ein Flüssigkristallelement variabler Dispersion nach der Propagation der Lichtimpulse durch den Strecker zumindest teilweise kompensiert werden. Dass der Strecker und der Kompressor dispersive Elemente mit im Wesentlichen entgegensetzt gleicher Dispersion sind, kann beispielsweise bedeuten, dass die Dispersionen von Strecker und Kompressor von ähnlichem Betrag sind aber entgegengesetzte Vorzeichen aufweisen.

Weitere Vorteile und Merkmale der vorliegenden Erfindung werden im Folgenden anhand der in den Figuren gezeigten Ausführungsbeispiele erläutert. Dabei zeigen

Figur 1:  eine schematische Darstellung eines Ausführungsbeispiels der erfindungsgemäßen Vorrichtung,

Figur 2:  ein Diagramm zur Veranschaulichung der Dispersionskompensation mittels Selbstphasenmodulation gemäß der Erfindung und

Figur 3:  eine schematische Darstellung eines weiteren Ausführungsbeispiels der erfindungsgemäßen Vorrichtung.

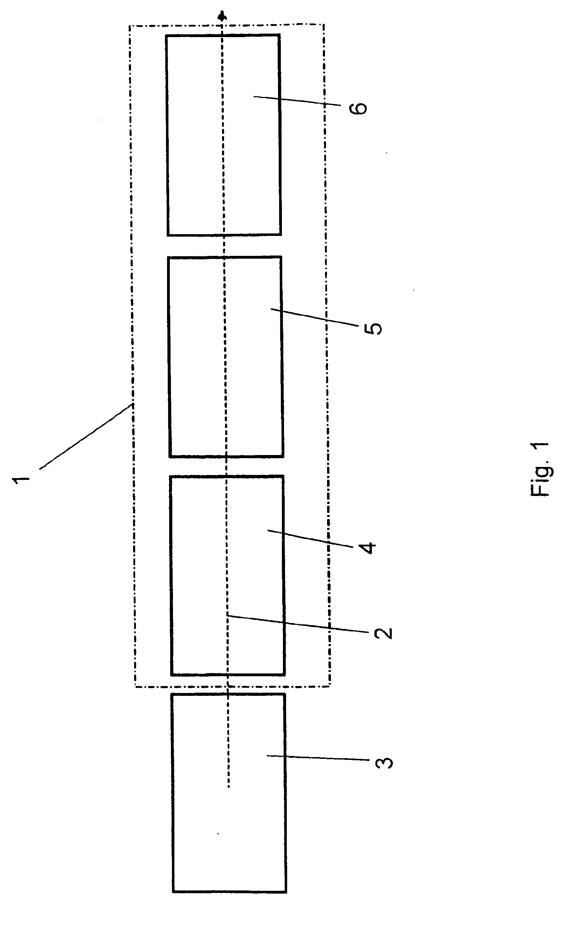

Figur 1 zeigt eine Ausführungsform der erfindungsgemäßen Vorrichtung 1 zum Verstärken von Lichtimpulsen 2. Die Lichtimpulse 2 werden von einer Kurzpulsquelle 3, z. B. einem Kurzpulsoszillator oder einem bereits verstärkten Kurzpulsoszillator, erzeugt und anschließend durch den Strecker 4 zeitlich gestreckt. Im Anschluss an die zeitliche Streckung der Lichtimpulse 2 erfolgt ein Verstärken derselben mittels des wenigstens einen Verstärkers 5 oder alternativ durch mehrere Verstärker 5 in Form einer Verstärkerkette. Nach Verstärkung der Lichtimpulse 2 werden diese durch den Kompressor 6 zeitlich rekomprimiert, so dass letztendlich kurze Lichtimpulse hoher Intensität bereitgestellt werden. Der in Figur 1 insgesamt gezeigte Aufbau entspricht im Wesentlichen einem CPA-System. Bei diesem CPA-System bzw. der gezeigten Ausführungsform der erfindungsgemäßen Vorrichtung 1 erfolgt eine Kompensation der Dispersion des Verstärkers 5, der Dispersion weiterer nicht gezeigter optischer Elemente der Vorrichtung (1) und/oder der Fehlanpassung der Dispersion von Strecker 4 und Kompressor 6 gemäß der Erfindung allein durch Selbstphasenmodulation. Es sind keine weiteren Bauelemente erforderlich, so dass insgesamt eine Vorrichtung 1 sehr einfachen und kompakten Aufbaus gegeben ist. Durch Wahl eines geeigneten Arbeitspunktes hinsichtlich Pulsamplitude und Pulsdauer kann die Vorrichtung 1 auf einfache Art und Weise so eingestellt werden, dass eine möglichst ideale Kompensation unerwünschter Dispersionsterme erfolgt.

Die schematische Darstellung der Figur 1 soll auch dahingehend verstanden sein, dass beispielsweise der Strecker 4 und/oder der Kompressor 6 als Elemente in Reflexion genutzt werden und dazu z. B. als gechirpte Bragg-Gitter ausgebildet sind. Eine solche Ausgestaltung der Vorrichtung 1 würde natürlich einen von in Figur 1 abweichenden Verlauf des Strahls der Lichtimpulse 2 erzeugen, welcher trotz allem von der schematischen Darstellung der Figur 1 erfasst sein soll. Hinzu kommt, dass der Strecker 4 und der Kompressor 6 als ein und dasselbe Element ausgebildet ist, welches beispielsweise als gechirptes Bragg-Gitter ausgebildet ist. Auch kann vorgesehen sein, dass statt des einen Verstärkers 5 mehrere Verstärker 5 in Form einer Verstärkerkette eingesetzt wird, um die gewünschte Verstärkung zu erhalten.

Eine optimale Dispersionskompensation liegt vor, wenn sich die durch die Elemente Strecker, Kompressor, Verstärker und der im Verstärker auftretenden Selbstphasenmodulation (SPM) jeweils erzeugten spektralen Phasenverschiebungen der Lichtimpulse gegenseitig aufheben, was mathematisch wie folgt ausgedrückt werden kann:

$$\Delta\varphi_{gesamt} = \varphi_{Strecker} + \varphi_{Kompressor} + \varphi_{Verstärkerelemente} + \varphi_{SPM} = 0$$

Nach Reihenentwicklung dieser Gleichung und Konzentration auf die Dispersionsterme 2. Ordnung ergibt sich:

$$\Delta\varphi_{gesamt} = \frac{\varphi''_{Strecker}}{2}\Omega^2 + \frac{\varphi''_{Kompressor}}{2}\Omega^2 + \frac{\varphi''_{Verstärkerelemente}}{2}\Omega^2 + \varphi_{SPM} = 0$$

Hierbei ist $\varphi''$ die zweite Ableitung der durch das jeweilige Element erzeugten spektralen Phase und $\Omega$ die Abweichung der Frequenz von der Zentralfrequenz der Lichtimpulse. Bei kleinsten Abweichungen ergibt sich eine nicht optimale Kompression der Lichtimpulse und somit eine Reduzierung der nutzbaren Impulsspitzenleistung.

Die Dispersion der meisten optischen Elemente, wie beispielsweise Optiken, optische Fasern, Faserverstärker, usw., ist im sichtbaren und nahinfraroten Spektralbereich normal. Im Fall ausreichend stark zeitlich gestreckter Lichtimpulse kann man die Wirkung der Dispersion und Selbstphasenmodulation getrennt voneinander betrachten. Die nichtlinear aufgeprägte, leistungsabhängige Phase der Selbstphasenmodulation entspricht bei positivem nichtlinearen Brechungsindex, was den Normalfall darstellt, anormaler Dispersion. Somit kann durch Einstellung eines geeigneten Arbeitspunktes des Systems hinsichtlich Pulsdauer und Pulsamplitude eine Kompensation der Dispersion der meisten optischen Elemente innerhalb der Vorrichtung erfolgen.

Die obige Gleichung wird in dem speziellen Fall, in dem die Dispersionswerte von Strecker und Kompressor betragsmäßig identisch sind, durch den folgenden mathematischen Ansatz gelöst:

$$\varphi''_{Strecker} = -\varphi''_{Kompressor}$$

$$\varphi_{SPM} = -\frac{\varphi''_{Verstärkerelemente}}{2}\Omega^2$$

Hierbei wird angenommen, dass der Strecker und der Kompressor dispersive Elemente mit im Wesentlichen entgegengesetzt gleicher Dispersion sind und sich somit die entsprechenden Phasenterme gegenseitig aufheben. Die zweite Gleichung besagt, dass die durch die Verstärkerelemente hervorgerufene spektrale Phase durch die leistungsabhängige, nichtlineare Phase der Selbstphasenmodulation ausgeglichen werden kann, so dass durch eine geeignete Einstellung der Selbstphasenmodulation eine Anpassung der Vorrichtung an den jeweils verwendeten Verstärker auf einfache Art und Weise und sehr effektiv erfolgen kann.

In einem CPA-System gilt weiter:

$$\varphi_{SPM} = B \cdot f(\Omega) = B \cdot \left(1 + f' \cdot \Omega + \frac{f''}{2}\Omega^2 + ...\right)$$

Hierbei ist B das so genannte *B*-Integral und steht für die im Verstärkersystem akkumulierte nichtlineare Phase. *f* ist die Linienformfunktion des Spektrums (normiert) und *f'* deren erste Ableitung. Eine exakte Kompensation der Dispersion 2. Ordnung ist beispielsweise bei einer parabelförmigen Lichtimpulsform zu erwarten, aber auch bei anderen Lichtimpulsformen wie beispielsweise eine sech[2]-Form oder Gauss-Form wird ein Großteil der durch die optischen Elemente aufgeprägten Phasen kompensiert. Für den Spezialfall der Verwendung von parabolischen Lichtimpulsen bzw. der parabolischen Näherung des spektralen Profils der Lichtimpulse gilt

$$f(\Omega) = 1 - \Omega^2 \cdot \left( \frac{\sqrt{2}}{\Delta\Omega_{FWHM}} \right)^2$$

wobei $\Delta\Omega_{FWHM}$ die spektrale Halbwertsbreite (FWHM) ist. Nach einigen Umformungen ergibt sich hieraus die Bedingung der Kompensation der Phasenterme der Verstärkerelemente durch die nichtlineare, leistungsabhängige Phase der Selbstphasenmodulation zu

$$B \cdot \frac{2}{\left(\Delta\Omega_{FWHM}\right)^2} \Omega^2 = \frac{\varphi''_{Verst\ddot{a}r\,ker\,elemente}}{2} \Omega^2 = \frac{\beta^{(2)} \cdot L}{2} \Omega^2$$

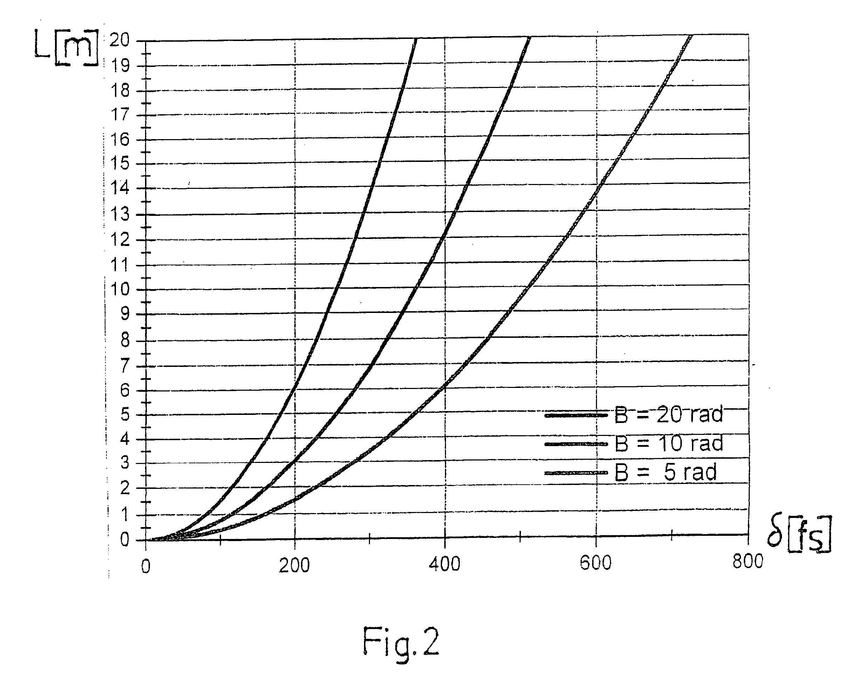

Hierbei ist $\beta^{(2)}$ der Gruppengeschwindigkeitsdispersions- (GVD)-Parameter und L die Länge der Verstärkerelemente. Für eine Zentralwellenlänge des Lichtimpulses von beispielsweise 1030 nm und der Annahme, dass die Verstärkerelemente aus Quarzglas bestehen ($\beta^{(2)}$ = 0,025 ps$^2$ / m) zeigt Figur 2 den Zusammenhang der Länge *L* der Verstärkerelemente zur Pulsdauer $\delta$ bei verschiedenen *B*-Integralen für optimale Kompensation der Phasenterme bei identisch ausgebildeten statischen Elementen zur Pulsstreckung und Pulskompression. Für die links in Figur 2 dargestellte Kurve gilt *B* = 20 rad, für die mittlere Kurve *B* = 10 rad und für die rechte Kurve B = 5 rad.

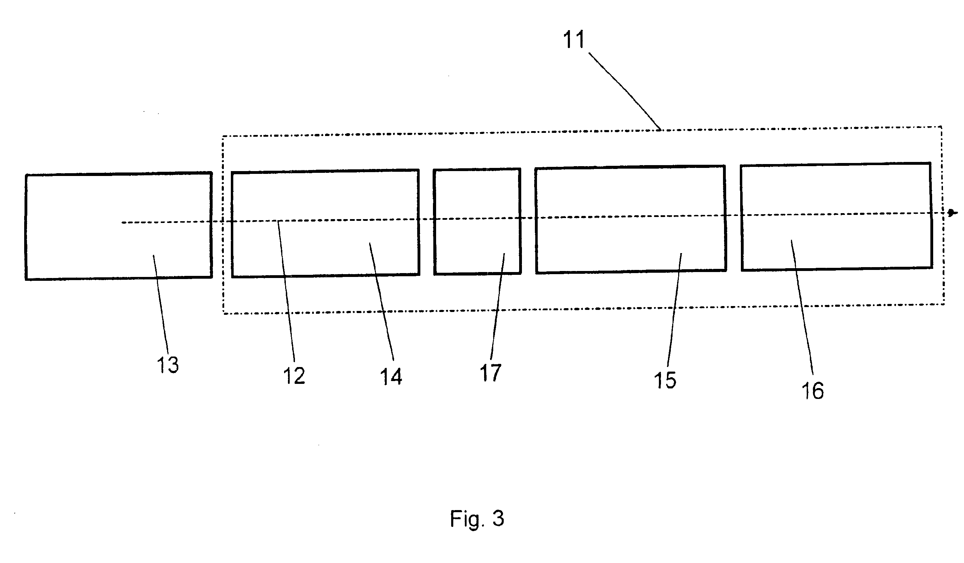

Figur 3 ist eine schematische Darstellung eines weiteren Ausführungsbeispiels für die erfindungsgemäße Vorrichtung 11. Auch in dieser Ausführungsform werden mittels der Vorrichtung 11 von einem Kurzpulsoszillator 13 erzeugte Lichtimpulse 12 verstärkt, wobei die Lichtimpulse 12 zunächst mittels des Streckers 14 zeitlich gestreckt, anschließend die gestreckten Lichtimpulse 12 durch den wenigstens einen Verstärker 15 oder durch mehrere Verstärker 15 verstärkt und abschließend die gestreckten und verstärkten Lichtimpulse 12 mittels des Kompressors 16 rekomprimiert werden. Bei der Ausführungsform gemäß Figur 3 ist vorzugsweise aber nicht zwingend zwischen dem Strecker 14 und dem Verstärker 15 ein zusätzliches Element 17 variabler Dispersion angeordnet, so dass durch dieses Element 17 allein oder in Kombination mit Selbstphasenmodulation der Lichtimpulse 12 eine Kompensation der Dispersion des Verstärkers 15, der Dispersion weiterer nicht gezeigter optischer Elemente der Vorrichtung 11 und/oder der Fehlanpassung der Dispersion von Strecker 14 und Kompressor 16 erfolgen kann.

Die alternativen Ausführungen zu Figur 1 bezüglich der Verwendung von Elementen in Reflexion als Strecker 14 und/oder Kompressor 16, einer Verstärkerkette und/oder von einem einzigen Element als Strecker 14 und Kompressor 16 gelten auch mit Bezug auf Figur 3.

Die anhand der Figuren beschriebenen Ausführungsbeispiele dienen der Erläuterung und sind nicht beschränkend.

**Patentansprüche**

1. Vorrichtung (1, 11) zum Verstärken von Lichtimpulsen (2, 12), mit einem Strecker (4, 14), der die Lichtimpulse (2, 12) zeitlich streckt, wenigstens einem Verstärker (5, 15), der die gestreckten Lichtimpulse (2, 12) verstärkt, und einem Kompressor (6, 16), der die gestreckten und verstärkten Lichtimpulse (2, 12) rekomprimiert, wobei der Strecker (4, 14) und der Kompressor (6, 16) dispersive Elemente mit im Wesentlichen entgegengesetzt gleicher Dispersion sind,
**dadurch gekennzeichnet, dass** die Dispersion des Verstärkers (5, 15), die Dispersion weiterer optischer Elemente der Vorrichtung (1) und/oder die Fehlanpassung der Dispersion von Strecker (4, 14) und Kompressor (6, 16) durch wenigstens ein zusätzliches Element (17) variabler Dispersion, welches zwischen Strecker (4, 14) und Verstärker (5, 15) angeordnet ist, zumindest teilweise kompensiert sind, wobei das wenigstens eine zusätzliche Element (17) variabler Dispersion ein verstellbares Prismen- oder Beugungsgitterpaar oder ein Flüssigkristallelement umfasst.

2. Vorrichtung (1, 11) nach Anspruch 1, **dadurch gekennzeichnet, dass** die dispersiven Elemente des Streckers (4, 14) und/oder des Kompressors (6, 16) eine statische oder eine schrittweise variable Dispersion haben, wobei das wenigstens eine zusätzliche Element (17) variabler Dispersion eine stufenlos variable Dispersion hat.

3. Vorrichtung (1, 11) nach Anspruch 1 oder 2, **dadurch gekennzeichnet, dass** die dispersiven Elemente des Streckers (4, 14) und/oder des Kompressors (6, 16) Beugungsgitter, gechirpte faseroptische oder volumenoptische Bragg-Gitter, Prismen oder Wellenleiterstrukturen wie optische Fasern sind.

4. Vorrichtung (1, 11) nach einem der Ansprüche 1 bis 3, **dadurch gekennzeichnet, dass** die Dispersion des wenigstens einen zusätzlichen Elements (17) variabler Dispersion betragsmäßig kleiner ist als die Dispersion des Streckers (4, 14) oder des Kompressors (6, 16).

5. Vorrichtung (1, 11) nach einem der Ansprüche 1 bis 4, **dadurch gekennzeichnet, dass** die Lichtimpulse (2, 12) eine parabolische Impulsform, eine sech$^2$-Form oder eine Gauss-Form haben.

6. Vorrichtung (1, 11) nach einem der Ansprüche 1 bis 5, **dadurch gekennzeichnet, dass** die Energie und die Dauer der Lichtimpulse (2, 12) sowie die Verstärkung der Lichtimpulse (2, 12) in der Weise aufeinander abgestimmt sind, dass die Dispersion des Verstärkers (5, 15), die Dispersion der weiteren optischen Elemente der Vorrichtung (1, 11) und/oder die Fehlanpassung der Dispersion von Strecker (4, 14) und Kompressor (6, 16) im Wesentlichen vollständig durch Selbstphasenmodulation der Lichtimpulse (2, 12) kompensiert sind.

7. Verfahren zum Verstärken von Lichtimpulsen (2, 12) unter Verwendung einer geeigneten Vorrichtung (1,11), wobei

- mittels eines Streckers (4, 14) die Lichtimpulse (2, 12) zeitlich gestreckt werden,
- mittels wenigstens eines Verstärkers (5, 15) die gestreckten Lichtimpulse (2, 12) verstärkt werden und
- mittels eines Kompressors (6, 16) die gestreckten und verstärkten Lichtimpulse (2, 12) rekomprimiert werden, wobei der Strecker (4, 14) und der Kompressor (6, 16) dispersive Elemente mit im Wesentlichen entgegengesetzt gleicher Dispersion sind,

**dadurch gekennzeichnet, dass** die Dispersion des Verstärkers (5, 15), die Dispersion von weiteren optischen Elementen der Vorrichtung (1, 11) und/oder die Fehlanpassung der Dispersion von Strecker (4, 14) und Kompressor (6, 16) durch Selbstphasenmodulation der Lichtimpulse (2, 12) unter Einstellung eines geeigneten Arbeitspunktes hinsichtlich Pulsamplitude und Pulsdauer und/oder durch wenigstens ein verstellbares Prismen- oder Beugungsgitterpaar oder ein Flüssigkristallelement variabler Dispersion nach der Propagation der Lichtimpulse durch den Strecker (4, 14) zumindest teilweise kompensiert werden.

**Claims**

1. Device (1, 11) for amplifying light pulses (2, 12), said device comprised of a stretcher (4, 14) which temporally stretches the light pulses (2, 12), comprised of at least one amplifier (5, 15) which amplifies the stretched light pulses (2, 12), and comprised of a compressor (6, 16) which recompresses the stretched and amplified light pulses (2, 12), wherein said stretcher (4, 14) and said compressor (6, 16) are dispersive elements with essentially oppositely identical dispersion, **characterized in that** the dispersion of the amplifier (5, 15), the dispersion of further optical elements of the device (1) and/or a mismatch of dispersion of the stretcher (4, 14) and the compressor (6, 16) are at least partly compensated by at least one additional element (17) of variable dispersion, which is arranged between the stretcher (4, 14) and the amplifier (5, 15), wherein the at least one additional element (17) of variable dispersion comprises an adjustable prism pair or diffracting grating pair or a liquid crystal element.

2. Device (1, 11) according to claim 1, **characterized in that** the dispersive elements of the stretcher (4, 14) and/or compressor (6, 16) have a static or a gradually variable dispersion, wherein the at least one additional element (17) of variable dispersion has an infinitely variable dispersion.

3. Device (1, 11) according to claim 1 or 2, **characterized in that** the dispersive elements of the stretcher (4, 14) and/or compressor (6, 16) are diffraction gratings, chirped fiber-optical or volume-optical Bragg gratings, prisms or waveguide structures such as optical fibers.

4. Device (1, 11) according to any of the preceding claims 1 to 3, **characterized in that** the dispersion of the at least one additional element (17) of variable dispersion is smaller in amount than the dispersion of the stretcher (4, 14) or of the compressor (6, 16).

5. Device (1, 11) according to any of the preceding claims 1 to 4, **characterized in that** the light pulses (2, 12) have a parabolic pulse shape, a sech$^2$-shape or a Gaussian shape.

**6.** Device (1, 11) according to any of the preceding claims 1 to 5, **characterized in that** the energy and the duration of the light pulses (2, 12) as well as the amplification of the light pulses (2, 12) are so tuned to each other that the dispersion of the amplifier (5, 15), the dispersion of the further optical elements of the device (1, 11) and/or a mismatch of the dispersion of the stretcher (4, 14) and compressor (6, 16) are essentially completely compensated for by self-phase modulation of the light pulses (2, 12).

**7.** Method for amplifying light pulses (2, 12) by using a suitable device (1, 11), wherein

- the light pulses (2, 12) are temporally stretched by means of a stretcher (4, 14),
- the stretched light pulses (2, 12) are amplified by means of at least one amplifier (5, 15), and
- the stretched and amplified light pulses (2, 12) are recompressed by means of a compressor (6, 16), wherein the stretcher (4, 14) and the compressor (6, 16) are dispersive elements with essentially oppositely identical dispersion,

**characterized in that** the dispersion of the amplifier (5, 15), the dispersion of further optical elements of the device (1, 11) and/or a mismatch of dispersion of the stretcher (4, 14) and the compressor (6, 16) are at least partly compensated by self-phase modulation of the light pulses (2, 12) by selecting a suitable working point with regard to pulse amplitude and pulse duration and/or by at least one adjustable prism pair or diffracting grating pair or a liquid crystal element of variable dispersion after propagation of the light pulses (2, 12) by the stretcher (4, 14).

## Revendications

**1.** Dispositif (1, 11) destiné à amplifier des impulsions lumineuses (2, 12), comprenant un étireur (4, 14) qui étire les impulsions lumineuses (2, 12) dans le temps, au moins un amplificateur (5, 15) qui amplifie les impulsions lumineuses (2, 12) étirées, et un compresseur (6, 16) qui comprime à nouveau les impulsions lumineuses (2, 12) étirées et amplifiées, étant entendu que l'étireur (4, 14) et le compresseur (6, 16) sont des éléments dispersifs ayant sensiblement une dispersion identique en sens opposé,
**caractérisé**
**en ce que** la dispersion de l'amplificateur (5, 15), la dispersion d'autres éléments optiques du dispositif (1) et/ou la désadaptation de la dispersion de l'étireur (4, 14) et du compresseur (6, 16) est compensée au moins partiellement au moyen d'au moins un élément (17) supplémentaire à dispersion variable qui est agencé entre l'étireur (4, 14) et l'amplificateur (5, 15), étant entendu que l'au moins un élément (17) supplémentaire à dispersion variable comprend une paire de prismes ou de réseaux de diffraction réglable ou un élément à cristaux liquides.

**2.** Dispositif (1, 11) selon la revendication 1, **caractérisé en ce que** les éléments dispersifs de l'étireur (4, 14) et/ou du compresseur (6, 16) ont une dispersion statique ou variable pas à pas, étant entendu que l'au moins un élément (17) supplémentaire à dispersion variable a une dispersion variable de façon continue.

**3.** Dispositif (1, 11) selon la revendication 1 ou 2, **caractérisé en ce que** les éléments dispersifs de l'étireur (4, 14) et/ou du compresseur (6, 16) sont des réseaux de diffraction, des réseaux de Bragg à fibres optiques ou à volumes optiques à compression, des prismes ou des structures de guidage d'ondes comme des fibres optiques.

**4.** Dispositif (1, 11) selon l'une des revendications 1 à 3, **caractérisé en ce que** la dispersion de l'au moins un élément (17) supplémentaire à dispersion variable est inférieure dans son ampleur à la dispersion de l'étireur (4, 14) ou du compresseur (6, 16).

**5.** Dispositif (1, 11) selon l'une des revendications 1 à 4, **caractérisé en ce que** les impulsions lumineuses (2, 12) ont une forme d'impulsion parabolique, une forme $\mathrm{sech}^2$ ou une forme de Gauss.

**6.** Dispositif (1, 11) selon l'une des revendications 1 à 5, **caractérisé en ce que** l'énergie et la durée des impulsions lumineuses (2, 12) ainsi que l'amplification des impulsions lumineuses (2, 12) sont coordonnées entre elles de telle sorte que la dispersion de l'amplificateur (5, 15), la dispersion des autres éléments optiques du dispositif (1, 11) et/ou la désadaptation de la dispersion de l'étireur (4, 14) et du compresseur (6, 16) sont essentiellement compensées intégralement au moyen d'une modulation de phase automatique des impulsions lumineuses (2, 12).

**7.** Procédé destiné à amplifier des impulsions lumineuses (2, 12) en utilisant un dispositif (1, 11) approprié, dans lequel :

- au moyen d'un étireur (4, 14), les impulsions lumineuses (2, 12) sont étirées dans le temps ;
- au moyen d'au moins un amplificateur (5, 15), les impulsions lumineuses (2, 12) étirées sont amplifiées ; et
- au moyen d'un compresseur (6, 16), les impulsions lumineuses (2, 12) étirées et amplifiées sont à nouveau comprimées, étant entendu que l'étireur (4, 14) et le compresseur (6, 16) sont des éléments dispersifs ayant sensiblement une dispersion identique en sens opposé,

**caractérisé**
**en ce que** la dispersion de l'amplificateur (5, 15), la dispersion d'autres éléments optiques du dispositif (1, 11) et/ou la désadaptation de la dispersion de l'étireur (4, 14) et du compresseur (6, 16) sont compensées au moins partiellement au moyen d'une modulation de phase automatique des impulsions lumineuses (2, 12) en définissant un point de travail approprié par rapport à l'amplitude des impulsions et à la durée des impulsions et/ou au moyen d'au moins une paire de prismes ou de réseaux de diffraction réglable ou d'un élément à cristaux liquides à dispersion variable après la propagation des impulsions lumineuses par le biais de l'étireur (4, 14).

Fig. 1

Fig.2

Fig. 3

**IN DER BESCHREIBUNG AUFGEFÜHRTE DOKUMENTE**

**In der Beschreibung aufgeführte Patentdokumente**

- DE 19531059 A1